# EUROPÄISCHE PATENTSCHRIFT

(11) **EP 1 313 631 B1**
(45) Veröffentlichungstag und Bekanntmachung des Hinweises auf die Patenterteilung: **17.03.2004**
(21) Anmeldenummer: 01976096.6
(22) Anmeldetag: 17.08.2001
(51) Int. Cl.: B60R 21/20, B60R 21/16

(54) **INSASSENSCHUTZVORRICHTUNG EINES FAHRZEUGS MIT EINEM AIRBAGMODUL**
PASSENGER PROTECTION DEVICE IN A MOTOR VEHICLE WITH AN AIRBAG MODULE
DISPOSITIF DE PROTECTION DE PASSAGER DE VEHICULE, COMPRENANT UN MODULE COUSSINS GONFLABLES DE SECURITE

(30) Priorität: 30.08.2000 DE 10042527
(43) Veröffentlichungstag der Anmeldung: 28.05.2003
(73) Patentinhaber: AUDI AG, 85045 Ingolstadt (DE)
(72) Erfinder: KRÖNES, Walter, 85049 Ingolstadt (DE); HÖHNE, Frank, 85051 Ingolstadt (DE)
(74) Vertreter: Engelhardt, Harald
(86) Internationale Anmeldenummer: PCT/EP2001/009494
(87) Internationale Veröffentlichungsnummer: WO 2002/018181

(56) Entgegenhaltungen:
- WO-A-97/34783
- DE-A- 19 904 072
- US-A- 4 828 286

## Beschreibung

Die Erfindung betrifft eine Insassenschutzvorrichtung eines Fahrzeugs mit einem Airbagmodul nach dem Oberbegriff des Anspruchs 1.

Eine bekannte Insassenschutzvorrichtung eines Fahrzeugs mit einem Airbagmodul, das hinter einem Wandbereich angeordnet ist und mindestens einen zusammengefalteten Airbag und mindestens einen Gasgenerator enthält (DE 196 17 758 C1), umfasst eine abgedeckte und aufdrückbare Austrittöffnung im Wandbereich für den sich nach einer Aktivierung entfaltenden Airbag.

Aus dem Dokument WO 9734783 A1 ist eine Insassenschutzvorrichtung nach dem Oberbegriff des Anspruchs 1 bekannt.

Die Austrittöffnung ist hier durch eine Abdeckkappe abgedeckt, die durch den Druck des sich entfaltenden und nachdrängenden Airbags von einer Geschlossenstellung in eine den Airbagaustritt ermöglichende Freigabeposition abhebbar ist. Zudem ist eine Fangbandhalterung für die Abdeckkappe vorgesehen. Die Abdeckkappe ist hier aus einer die Abdeckkappe umgebenden Airbag-Abdecköffnung aus dem Wandbereich herausdrückbar. Zur Vergrößerung dieser Öffnung sind zusätzlich Sollbruchlinien vorgesehen, die sich im Wandbereich etwa radial von der Airbag-Austrittöffnung weg erstrecken. Die Bewegung einer herausgedrückten und abgehobenen Abdeckkappe erfolgt relativ unkontrolliert im durch die Fangbandlänge begrenzten Bereich, wodurch diese Abdeckkappen auch eine erhöhte Aggressivität gegenüber einem Fahrzeuginsassen aufweisen können. Für einen möglichst unbehinderten Airbagaustritt ist ein bestimmter, relativ großer Öffnungsdurchmesser erforderlich, so dass entsprechend auch die abhebbare Abdeckkappe einen relativ großen Durchmesser hat. Damit sind insbesondere Gestaltungsfreiheiten zu kleineren Abdeckkappendurchmessern hin, wie dies z. B. im Lenkradnabenbereich bei einem Lenkradairbag erforderlich ist, eingeschränkt. Hierbei ist jedoch ferner zu beachten, dass kleinere abhebbare Abdeckkappen zudem eine erhöhte Aggressivität gegenüber einem Insassen entwickeln können.

Ein ähnlicher Aufbau ist auch aus der DE 40 10 767 A1 bekannt.

Weiter ist aus der DE 197 49 914 A1 bereits eine Insassenschutzvorrichtung an einem Lenkrad eines Fahrzeugs mit einem Lenkrad-Airbagmodul bekannt, wobei das Lenkrad-Airbagmodul hinter einer Nabenabdeckung einer Lenkradnabe angeordnet ist und mindestens einen zusammengefalteten Lenkradairbag und mindestens einen Gasgenerator enthält. Die Nabenabdeckung weist einen ortsfesten Zentrumsbereich als ersten Wandbereich auf, um den herum ein sich daran mit einem Randanschlussbereich unmittelbar anschließender zweiter Wandbereich angeordnet ist. Im zweiten Wandbereich ist beabstandet vom ortsfesten Zentrumsbereich und damit beabstandet vom Randanschlussbereich eine konzentrisch zum ortsfesten Zentrumsbereich angeordnete, kreisförmig umlaufende Sollaufreißlinie vorgesehen. Des weiteren ist im zweiten Wandbereich eine Vielzahl von radial verlaufenden, strahlenförmigen Sollaufreißlinien ausgebildet, die sich vom Randanschlussbereich des zweiten Wandbereichs ausgehend bis in einen Bereich über die kreisförmig umlaufende Sollaufreißlinie hinaus radial erstrecken, so dass an der Nabenabdeckung einzelne Klappenbereiche ausgebildet werden. Im Falle einer Airbagaktivierung wird durch den sich ringförmig um den ortsfesten Zentrumsbereich herum aufblasenden Airbag ein Druck von unten her auf den zweiten Wandbereich ausgeübt dergestalt, dass die einzelnen Sollaufreißlinien aufreißen und damit einen Ringspalt um den ortsfesten Zentrumsbereich herum zum Airbagaustritt freigeben. Der zweite Wandbereich reißt dabei so auf, dass der Ringspalt beabstandet vom ortsfesten Zentrumsbereich in etwa im Bereich der kreisförmig umlaufenden Sollaufreißlinie durch die einzelnen aufreißenden Klappenbereiche gebildet wird.

Mit einem derartigen Aufbau ist eine abhebbare Abdeckkappe entbehrlich, da der vom Ringspalt umgebende Wandbereich als Zentrumsbereich ortsfest bestehen bleiben kann. Die Nabenabdeckung ist hier aus einem solchen Kunststoffmaterial hergestellt, mit dem es möglich ist, die einzelnen Sollbruchstellen der Sollaufreißlinien an der Innenseite der Abdeckung vorzusehen, so dass diese von der Außenseite her nicht sichtbar sind. Ein derartiger Aufbau einer Nabenabdeckung mit Sollaufreißlinien ist jedoch nur mit bestimmten Kunststoffmaterialien möglich. Insbesondere bei hochwertigen Fahrzeuginnenraumausstattungen besteht jedoch auch in Verbindung mit der Gestaltung von Lenkradüberzügen und damit auch Nabenüberzügen der Wunsch des Einsatzes von anderen hochwertigen Materialien, wie z. B. Leder, hochwertigem Textil- bzw. Gewebematerial, etc. Problematisch ist jedoch bei derartigen hochwertigen Materialien, dass hier Sollaufreißlinien bzw. Sollbruchstellen in unerwünschter Weise von außen, d. h. von der Sichtseite her sichtbar sind. Dies führt zu einem insgesamt qualitativ minderwertig wirkenden Eindruck und vermindert daher den optischen Gesamteindruck, insbesondere bei hochwertigen Fahrzeuginnenraumausstattungen. Zudem wird hierdurch der Überzug ggf. beschädigt. Daher ist ein derartiger Aufbau einer Insassenschutzvorrichtung an einem Lenkrad mit derartigen Sollaufreißlinien insbesondere bei der Verwendung von den eben erwähnten Materialien für Naben- und Lenkradüberzüge wenig praktikabel und daher deren Einsatzmöglichkeit lediglich beschränkt.

Des weiteren erfordert eine derartige Herstellung von Sollaufreißlinien durch einzelne Sollbruchstellen auch einen erheblichen, herstellungstechnischen Aufwand, so dass die Herstellung zudem auch insgesamt relativ teuer ist.

Eine Insassenschutzvorrichtung an einem Lenkrad eines Fahrzeugs, bei dem eine Vielzahl von unterschiedlichen Materialien, insbesondere auch hochwertige Leder- und/oder Gewebematerialien, als Naben- und/oder Lenkradüberzüge verwendbar sind, ist aus der gattungsgemäßen WO 97/43783 bekannt. Bei dieser Insassenschutzvorrichtung ist ein Lenkrad-Airbagmodul hinter einer Nabenabdeckung einer Lenkradnabe angeordnet und weist mindestens einen zusammengefalteten Lenkradairbag und mindestens einen Gasgenerator auf. Die Nabenabdeckung weist einen ortsfesten Zentrumsbereich als ersten Wandbereich auf, um den herum ein sich daran mit einem Randanschlussbereich unmittelbar anschließender zweiter Randbereich angeordnet ist. Im Falle der Airbagaktivierung ist im zweiten Wandbereich ein Ringspalt um den ortsfesten Zentrumsbereich herum ausbildbar, wobei der Lenkradairbag entsprechend ringförmig mit einem dem Ringspalt zugeordneten und davon im aufgeblasenen Zustand ausgehenden Rohrbereich ausgebildet ist. Der Ringspalt ist im Falle einer Airbagaktivierung unmittelbar um den ortsfesten Zentrumsbereich herum durch Aufweiten und/oder Aufreißen wenigstens des Randanschlussbereichs des zweiten Wandbereichs ausbildbar.

Konkret liegt hier der Randanschlussbereich des zweiten Wandbereichs von unten her am ortsfesten Zentrumsbereich an, d. h. der Randanschlussbereich des zweiten Wandbereichs wird von einem Randbereich des ortsfesten Zentrumsbereichs überdeckt. Bei einer Airbagaktivierung drückt der sich aufblasende Airbag den zweiten Wandbereich und insbesondere den Randanschlussbereich nach außen und damit weg von der Anlageverbindung unter dem ortsfesten Zentrumsbereich zur Freigabe des Ringspaltes. Bei diesem Aufbau besteht bei nicht aktivierter Insassenschutzvorrichtung die Gefahr, dass durch unsachgemäße Behandlung, wie beispielsweise einem Abstützen im Bereich des zweiten Wandbereichs, dass der zweite Wandbereich vom ortsfesten Zentrumsbereich abgehoben wird und dadurch ein unerwünschter Zugang zu dem Bereich des Airbags bzw. des Airbagmoduls freigegeben wird. Ferner ist dadurch auch eine gewisse unerwünschte Manipulationsgefahr gegeben, insbesondere dann, wenn der zweite Wandbereich aus einem Material hergestellt ist, das relativ nachgiebig gestaltet ist.

Ein ähnlicher Aufbau mit denselben Nachteilen ist auch aus der US-A-4,828,286 bekannt, bei der der Randanschlussbereich des zweiten Wandbereichs im Randbereich des ortsfesten Zentrumsbereichs von oben her aufliegt.

Aufgabe der Erfindung ist es daher, eine gattungsgemäße Insassenschutzvorrichtung so weiterzubilden, dass die Gefahr eines unerwünschten Abhebens des Randanschlussbereichs vom ortsfesten Zentrumsbereich im nicht aktivierten Zustand der Insassenschutzvorrichtung vermieden werden kann.

Diese Aufgabe wird gelöst mit den Merkmalen des Anspruchs 1.

Gemäß Anspruch 1 ist der Randanschlussbereich des zweiten Wandbereichs im nicht aktivierten Zustand der Insassenschutzvorrichtung am ortsfesten Zentrumsbereich verklemmt, wobei der Randanschlussbereich durch den sich aufblasenden Airbag aus der Verklemmung herausziehbar und zur Ausbildung des Ringspalts um den ortsfesten Zentrumsbereich herum aufweitbar und/oder ausreißbar ist.

Mit einer derartigen Verklemmung des Randanschlussbereiches im nicht aktivierten Zustand der Insassenschutzvorrichtung des zweiten Wandbereichs am ortsfesten Zentrumsbereich können die oben genannten Nachteile vorteilhaft vermieden werden, da der Randanschlussbereich dadurch am ortsfesten Zentrumsbereich gehalten ist. Die Verklemmung ist hierbei so ausgelegt, dass der Randanschlussbereich im aktivierten Zustand der Insassenschutzvorrichtung durch den sich aufblasenden Airbag aus der Verklemmung herausziehbar ist.

Weiter brauchen bei einem derartigen Aufbau keine Sollaufreißlinien bzw. Sollbruchstellen hergestellt werden, wodurch der Herstellungsaufwand verringert wird und damit eine insgesamt einfache und preiswerte Herstellung möglich ist. Insbesondere können jedoch dadurch in Verbindung mit Naben- und Lenkradüberzügen auch einen hochwertigen Eindruck vermittelnde Materialien, wie z. B. Leder und/oder Gewebe, etc., verwendet werden, ohne dass die Sichtseite derartiger Überzüge in optisch unansehnlicher Weise beeinträchtigt oder ggf. sogar beschädigt wird, wie dies insbesondere mit den Anforderungen für hochwertige Fahrzeuginnenraumausstattungen unvereinbar ist. In einer bevorzugten Ausführungsform ist der zweite Wandbereich daher wenigstens teilweise als Lederüberzug ausgebildet.

In einer konkreten Ausführungsform liegt der vorzugsweise biegesteif und formstabil ausgebildete, ortsfeste Zentrumsbereich gemäß Anspruch 2 mit einem Zentrums-Randbereich auf dem Randanschlussbereich des zweiten Wandbereichs auf. Der Randanschlussbereich ist zwischen dem Zentrums-Randbereich und einem vorzugsweise ortsfest angeordneten sowie vorzugsweise biegesteif und formstabil ausgebildeten Klemmelement verklemmt. Bei einem derartigen Aufbau wird der Randanschlussbereich durch den sich aufblasenden Airbag aus der Verklemmung herausgezogen, wobei wenigstens der Randanschlussbereich zur Ausbildung des Ringspalts um das ortsfeste Zentrumselement herum auweitbar und/oder aufreißbar ist.

Eine besonders effektive Verklemmung ergibt sich mit den Merkmalen des Anspruchs 3, gemäß denen das Klemmelement den Randanschlussbereich vom Airbagmodul her gesehen mit einem Klemmelement-Randbereich abstützt bzw. verklemmt.

In einer besonders bevorzugten konkreten Ausbildung ist der ortsfeste Zentrumsbereich nach Anspruch 4 plattenförmig ausgebildet und mit einem zentralen und in etwa vertikal ausgerichteten Stiftfortsatz am Airbagmodul, vorzugsweise am Diffusor festlegbar. Das Klemmelement ist wannenförmig mit einem Wannenrand als Klemmelement-Randbereich ausgebildet und weist eine zentrale Öffnung auf, durch die der Stiftfortsatz des ortsfesten Zentrumsbereichs vorzugsweise formschlüssig durchgreift. Ein derartiger Aufbau ist bei hoher Funktionssicherheit einfach und preiswert herstellbar.

In einer alternativen Ausführungsform weist der vorzugsweise biegesteif und formstabil ausgebildete ortsfeste Zentrumsbereich gemäß Anspruch 5 an einer Umfangsfläche eine Umfangsnut auf, in die der Randanschlussbereich des zweiten Wandbereichs durch Einklipsen so verklemmbar ist, dass der Randanschlussbereich durch den sich aufblasenden Airbag aus der Umfangsnut herausziehbar und zur Ausbildung des Ringspalts um das Zentrumselement herum durch den sich aufblasenden Airbag aufweitbar und/oder aufreißbar ist. Vorteilhaft ergibt sich hier ein verringerter Bauteilaufwand, da der ortsfeste Zentrumsbereich in einer Doppelfunktion gleichzeitig auch zur Festlegung bzw. Verklipsung des Randanschlussbereichs verwendet wird.

Derartige ortsfeste Zentrumsbereiche können zum Beispiel integral mit Zierelementen gefertigt werden. Alternativ ist es aber auch möglich separate Embleme mit dem ortsfesten Zentrumsbereich zu verklipsen, vercrimpen oder zu verkleben.

Gemäß Anspruch 6 stützt sich der ortsfeste Zentrumsbereich zur Ausrichtung mit Füßen auf dem Airbagmodulgehäuse, vorzugsweise einem Diffusor, ab, wobei der ortsfeste Zentrumsbereich über einen zentralen und in etwa vertikalen ausgerichteten Stiftfortsatz am Airbagmodulgehäuse, vorzugsweise am Diffusor festlegbar, vorzugsweise verschraubbar ist. Mit einem derartigen Aufbau ist auch bei einem im Umfangsbereich des ortsfesten Zentrumsbereichs verklipsten Randanschlussbereich ein richtiger Sitz des ortsfesten Zentrumsbereichs auf einfache Weise sichergestellt.

Grundsätzlich kann der ortsfeste Zentrumsbereich auf verschiedene Art und Weise hergestellt werden, vorzugsweise jedoch als Guss- oder Kaltpressfließteil.

Zweckmäßig wird der den ortsfesten Zentrumsbereich bildende vom Ringspalt umgebene erste Wandbereich, vorzugsweise eine ortsfeste Zierkappe, nach Anspruch 7 fest mit dem darunterliegenden Airbagmodulgehäuse verbunden. Je nach den Gegebenheiten könnte zumindest auch ein Teil einer Gehäusewand des Airbagmoduls den ortsfesten Zentrumsbereich als Sichtfläche bilden. Insbesondere durch eine Kombination von Sichtflächen mit Zierkappen und/oder Emblemen ergeben sich weitere Gestaltungsmöglichkeiten.

Für einen möglichst behinderungsfreien Airbagaustritt ist es nach Anspruch 8 zweckmäßig, den Ringspalt etwa kreisringförmig auszubilden, so dass dieser einen entsprechend etwa kreisflächenförmigen ersten Wandbereich umgibt. Damit ist eine solche Anordnung vorteilhaft einer herkömmlichen Nabengrundform eines Lenkrads angepasst. Grundsätzlich ist aber auch eine rechteckförmige Ausbildung des Ringspalts möglich, wobei der ringförmig ausgebildete Airbag dann entsprechend eine Rechteckform aufweist.

Gemäß Anspruch 9 kann auch eine deckelförmige zentrale Zierkappe für ein definiertes Austrittsverhalten des Airbags mit einbezogen werden, indem ein Randbereich der Zierkappe ggf. durch den herausdrängenden Airbag zur Ringspaltvergrößerung und zur Ausbildung einer Leitfläche aufbiegbar ist.

Gemäß Anspruch 10 ist im Ringspalt ein Austritt-Ring-Kanal für den Airbag gebildet, der durch Kanalwände begrenzt ist. Auch durch eine bestimmte Formgebung dieser Kanalwände kann das Austrittverhalten des Airbags in vorgebbarer Weise mit beeinflusst werden. Beispielsweise wirkt eine konusförmige Verengung des Austritt-Ring-Kanals zum Ringspalt hin für den Airbagaustritt verzögernd.

Nach Anspruch 11 ist der ortsfeste Zentrumsbereich durch eine ortsfeste Zierkappe gebildet. Der Ringspalt kann für einen unbehinderten Airbagaustritt relativ groß dimensioniert sein, so dass eine relativ kleine Zierkappe möglich wird, was Designfreiräume eröffnet. So kann die Zierkappe aufgrund ihrer ortsfesten Anordnung nunmehr vorteilhaft zur Anbringung von Bedien- und Designelementen, wie z. B. von Tasten, Holzblenden oder ggf. sogar einem Bildschirm, genutzt werden. Weiter vorteilhaft hängt damit das Montagekonzept des Airbagmoduls nicht mehr vom Kappenkonzept ab, sondern kann beispielsweise von einem Zulieferbetrieb frei gewählt werden, indem der Luftsack z. B. in die Zierkappe oder in den Gasgeneratorträger gefaltet werden kann. Dadurch wird mit einem derartigen Aufbau ein weiterer konstruktiver und gestalterischer Freiraum geschaffen.

Um im Falle eines Sekundäraufpralls eine gewisse Schutzfunktion auszuüben, ist gemäß Anspruch 12 vorgesehen, dass der ortsfeste Zentrumsbereich, vorzugsweise eine Zierkappe, mit einem Dämmstoff, vorzugsweise einem Schaumstoff, unterlegt ist.

Anhand einer Zeichnung wird die Erfindung näher erläutert.

Es zeigen:
- Fig. 1: eine schematische Draufsicht auf eine Nabenabdeckung mit entfaltetem Airbag,
- Fig. 2: eine schematische Querschnittsansicht entlang der Linie A-A der Fig. 1,
- Fig. 3: eine schematische Querschnittsdarstellung durch eine erste, konkrete Ausführungsform einer Insassenschutzvorrichtung, und
- Fig. 4: einen schematischen Querschnitt durch eine weitere Ausführungsform einer erfindungsgemäßen Insassenschutzvorrichtung.

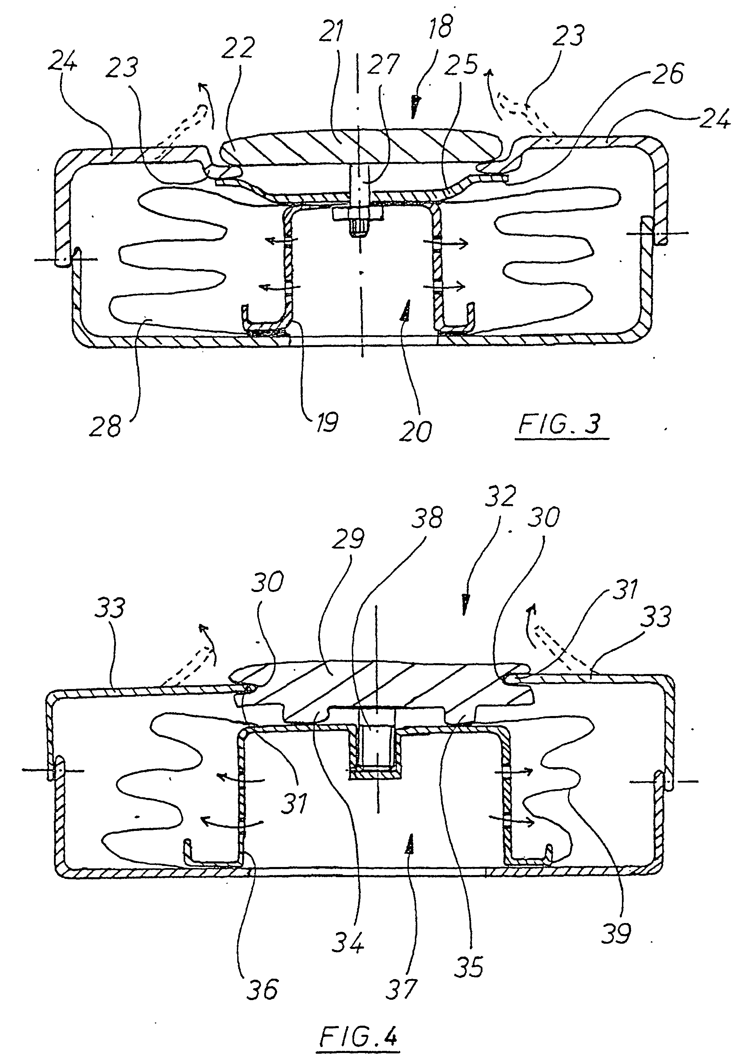

In der Fig. 3 ist eine erste, konkrete Ausführungsform einer Nabenabdeckung 18 eines Lenkrades 2 dargestellt, bei der der einen ersten Wandbereich der Nabenabdeckung 18 bildende ortsfeste Zentrumsbereich durch eine fest mit einem Diffusor 19 eines Airbagmoduls 20 verbindbare und vorzugsweise biegesteif und formstabil ausgebildete Zierkappe 21 gebildet ist. Die Zierkappe 21 liegt mit einem Zentrums-Randbereich 22 auf einem Randanschlussbereich 23 eines zweiten Wandbereichs 24 der Nabenabdeckung 18 auf. Der Randanschlussbereich 23 ist zwischen dem Zentrums-Randbereich 22 und einem ortsfest angeordneten sowie vorzugsweise biegesteif und formstabil ausgebildeten Klemmelement 25 verklemmt, wobei das Klemmelement 25 den Randanschlussbereich 23 vom Airbagmodul 20 her gesehen mit einem Klemmelement-Randbereich 26 abstützt. Das Klemmelement 25 weist hier einen in etwa wannenförmigen Aufbau auf, während die Zierkappe 21 plattenförmig ausgebildet ist und mit einem zentralen und in etwa vertikal ausgerichteten Stiftfortsatz 27 am Diffusor 19 festgelegt ist. Das Klemmelement 25 weist ebenfalls eine zentrale Öffnung auf, durch die der Stiftfortsatz 27 der Zierkappe 21 vorzugsweise formschlüssig durchgreift.

Im Falle einer Airbagaktivierung wird über den Diffusor, wie dies in der Fig. 3 durch die Pfeile schematisch angedeutet ist, Luft in einen ringförmigen Airbag 28 eingeblasen. Durch den sich aufblasenden Airbag 28 wird der Randanschlussbereich 23 aus der Verklemmung zwischen der Zierkappe 21 und dem Klemmelement 25 herausgezogen, wobei die Nabenabdeckung 18 im Randanschlussbereich 23 unmittelbar um die Zierkappe 21 herum zur Ausbildung eines Ringspalts 5 aufgeweitet wird und/oder aufreißt, was hier lediglich strichliert und äußerst schematisch dargestellt ist.

In der Fig. 4 ist eine weitere alternative Ausführungsform dargestellt, die sich von derjenigen gemäß Fig. 3 dahingehend unterscheidet, dass eine Zierkappe 29 hier an einer Umfangsfläche eine Umfangsnut 30 aufweist, in die ein Randanschlussbereich 31 eines zweiten Wandbereichs 33 einer Nabenabdeckung 32 eingeklipst bzw. eingeklemmt ist. Die Zierkappe 29 stützt sich zur Ausrichtung mit Füßen 34, 35 auf einem Diffusor 36 eines Airbagmoduls 37 ab und ist über einen Stiftfortsatz 38 lösbar mit dem Diffusor 36 verschraubt.

Im Falle einer Airbagaktivierung wird hier durch einen sich aufblasenden ringförmigen Airbag 39 der Randanschlussbereich 31 aus der Umfangsnut 30 gezogen, wodurch die Nabenabdeckung 32 im Randanschlussbereich 31 zur Ausbildung eines Ringspalts unmittelbar um die Zierkappe 29 herum aufgeweitet wird und/oder aufreißt, was hier lediglich strichliert und äußerst schematisch dargestellt ist.

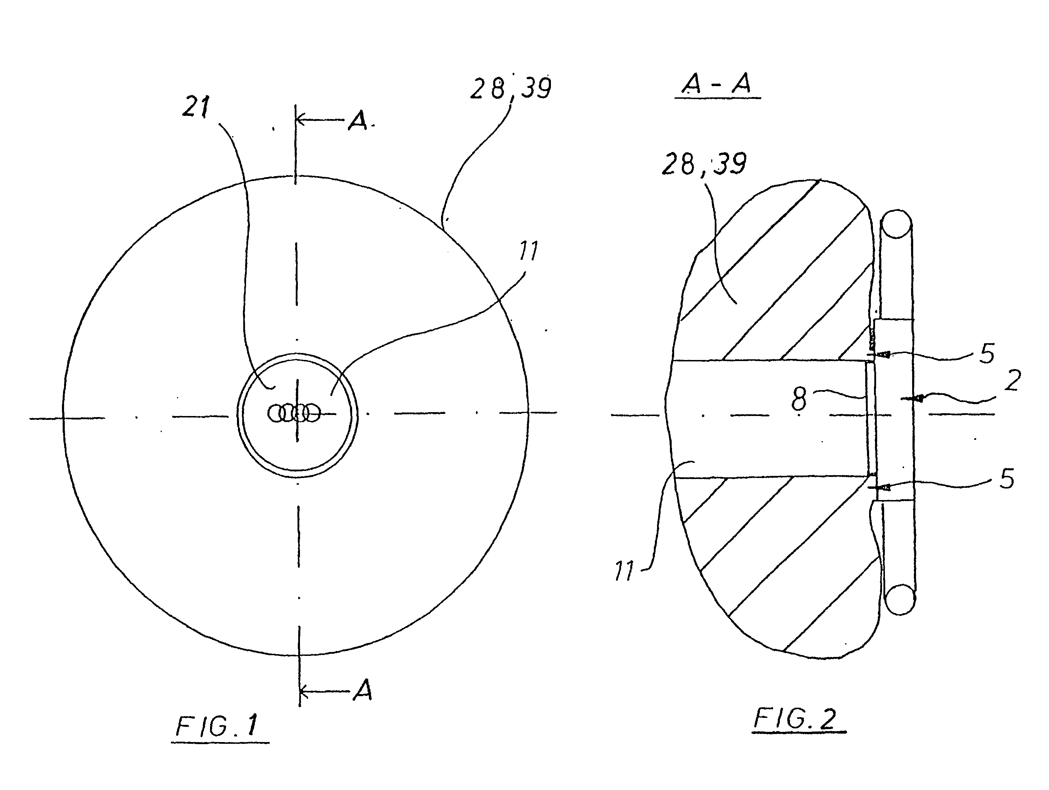

Der aufgeblasene Zustand der Airbags 28, 39 ist in einer Draufsicht schematisch in Fig. 1 gezeigt, während Fig. 2 einen schematischen Schnitt entlang der Linie A-A zeigt. Der zentrale Rohrbereich 11 des Airbags weist vorteilhaft einen relativ kleinen Durchmesser auf und wird bei aufgeblasenem Airbag aufgrund des Airbaginnendrucks weitgehend durch aufeinanderzustrebende Rohrwände wieder geschlossen, so dass die Schutzfunktion des ringförmigen Airbags genauso gegeben ist wie bei einem herkömmlichen, ballonförmigen Airbag.

Aufgrund ihrer ortsfesten Anordnung kann z. B. die Zierkappe 21 zur Anbringung von Bedien- und Designelementen, wie z. B. von Tasten, Holzblenden etc. vorteilhaft genutzt werden. Beispielhaft kann hier die Zierkappe 21 in ihrer Funktion als Emblemträger zur Aufbringung eines Firmensymbols verwendet, wobei dieses Firmensymbol entweder integral mit der Zierkappe 21 ausgebildet sein kann oder aber auch als separates Bauteil mit der Zierkappe 21 verklebt oder verklipst werden kann.

Weiter kann, was hier jedoch nicht dargestellt ist, unter dem im Falle der Airbagaktivierung freigegebenen Ringspalt ein Austritt-Ringkanal gebildet sein, der durch Kanalwände begrenzt ist. Durch eine bestimmte Formgebung dieser Kanalwände kann das Austrittsverhalten des Airbags in vorgebbarer Weise mit beeinflusst werden. Zum Beispiel kann eine konusförmige Verengung im Austritt-Ringkanal vorgesehen sein.

## Patentansprüche

1. Insassenschutzvorrichtung an einem Lenkrad (2) eines Fahrzeugs mit einem Lenkrad-Airbagmodul (20,37),
wobei das Lenkrad-Airbagmodul (20,37) hinter einer Nabenabdeckung (18,32) einer Lenkradnabe angeordnet ist und mindestens einen zusammengefalteten Lenkradairbag (28,39) und mindestens einen Gasgenerator enthält,
wobei die Nabenabdeckung (18,32) einen ortsfesten Zentrumsbereich als ersten Wandbereich aufweist, um den herum ein sich daran mit einem Randanschlussbereich (23,31) unmittelbar anschließender zweiter Wandbereich (24,33) angeordnet ist,
wobei im Falle der Airbagaktivierung im zweiten Wandbereich (24,33) ein Ringspalt (5) um den ortsfesten Zentrumsbereich (21,29) herum ausbildbar ist,
wobei der Lenkradairbag entsprechend ringförmig mit einem dem Ringspalt (5) zugeordneten und davon im aufgeblasenen Zustand ausgehenden Rohrbereich (11) ausgebildet ist,
wobei der Ringspalt (5) im Falle einer Airbagaktivierung unmittelbar um den ortsfesten Zentrumsbereich (21,29) herum durch Aufweiten und/oder Aufreißen wenigstens des Randanschlussbereichs (23,31) des zweiten Wandbereichs (24,33) ausbildbar ist,
**dadurch gekennzeichnet,**
**dass** der Randanschlussbereich (23; 31) des zweiten Wandbereichs (33) im nicht aktivierten Zustand der Insassenschutzvorrichtung am ortsfesten Zentrumsbereich (21; 29) verklemmt ist, und
**dass** der Randanschlussbereich (23; 31) durch den sich aufblasenden Airbag (28) aus der Verklemmung herausziehbar und zur Ausbildung des Ringspalts (5) um den ortsfesten Zentrumsbereich (21; 29) herum aufweitbar und/oder aufreißbar ist.

2. Insassenschutzvorrichtung nach Anspruch 1, **dadurch gekennzeichnet,**
**dass** der ortsfeste Zentrumsbereich (21) mit einem Zentrums-Randbereich (22) auf dem Randanschlussbereich (23) des zweiten Wandbereichs (24) aufliegt, und
**dass** der Randanschlussbereich (23) zwischen dem Zentrums-Randbereich (22) und einem Klemmelement (25) verklemmt ist.

3. Insassenschutzvorrichtung nach Anspruch 2, **dadurch gekennzeichnet, dass** das Klemmelement (25) den Randanschlussbereich (23) vom Airbagmodul (20) her gesehen mit einem Klemmelement-Randbereich (26) verklemmt.

4. Insassenschutzvorrichtung nach Anspruch 2 oder Anspruch 3, **dadurch gekennzeichnet,**
**dass** der ortsfeste Zentrumsbereich (21) plattenförmig ausgebildet ist und mit einem zentralen und in etwa vertikal ausgerichteten Stiftfortsatz (27) am Airbagmodul (20), vorzugsweise am Diffusor (19), festlegbar ist, und
**dass** das Klemmelement (25) wannenförmig mit einem Wannenrand als Klemmelement-Randbereich (26) ausgebildet ist und eine zentrale Öffnung aufweist, durch die der Stiftfortsatz (27) des ortsfesten Zentrumsbereichs (21) vorzugsweise formschlüssig durchgreift.

5. Insassenschutzvorrichtung nach Anspruch 1, **dadurch gekennzeichnet,**
**dass** der ortsfeste Zentrumsbereich (29) an einer Umfangsfläche eine Umfangsnut (30) aufweist, in die der Randanschlussbereich (31) des zweiten Wandbereichs (33) einklipsbar ist dergestalt,
**dass** der Randanschlussbereich (31) durch den sich aufblasenden Airbag (39) aus der Umfangsnut (30) herausziehbar und zur Ausbildung des Ringspalts um das Zentrumselement (29) herum durch den sich aufblasenden Airbag (39) aufweitbar und/oder aufreißbar ist.

6. Insassenschutzvorrichtung nach Anspruch 5, **dadurch gekennzeichnet,**
**dass** sich der ortsfeste Zentrumsbereich (29) zur Ausrichtung mit Füßen (34, 35) auf dem Airbagmodulgehäuse, vorzugsweise einem Diffusor (36), abstützt, und
**dass** der ortsfeste Zentrumsbereich (29) über einen zentralen und in etwa vertikal ausgerichteten Stiftfortsatz (38) am Airbagmodulgehäuse, vorzugsweise am Diffusor (36), festlegbar, vorzugsweise verschraubbar ist.

7. Insassenschutzvorrichtung nach einem der Ansprüche 1 bis 6, **dadurch gekennzeichnet, dass** der den ortsfesten Zentrumsbereich (21; 29) bildende vom Ringspalt (5) umgebene erste Wandbereich mit dem Airbagmodulgehäuse (9) fest verbunden ist und/oder dass zumindest ein Teil einer Gehäusewand des Airbagmoduls den ortsfesten Zentrumsbereich (21; 29) als Sichtfläche bildet.

8. Insassenschutzvorrichtung nach einem der Ansprüche 1 bis 7, **dadurch gekennzeichnet, dass** der Ringspalt (5) etwa kreisringförmig ausgebildet ist und einen etwa kreisflächenförmigen ersten Wandbereich als ortsfesten Zentrumsbereich (21; 29) umgibt.

9. Insassenschutzvorrichtung nach einem der Ansprüche 1 bis 8, **dadurch gekennzeichnet, dass** der im Falle einer Airbagaktivierung im zweiten Wandbereich (24; 33) ausbildbare Ringspalt (5) so vom Randbereich einer vorzugsweise deckelförmigen Zierkappe als ortsfester Zentrumsbereich (8) begrenzt ist, dass dieser Randbereich von einem aus dem Ringspalt (5) drängenden Airbag nach außen zur Ringspaltvergrößerung und zur Ausbildung einer Leitfläche aufbiegbar ist.

10. Insassenschutzvorrichtung nach einem der Ansprüche 1 bis 9, **dadurch gekennzeichnet, dass** unter dem Ringspalt (5) ein Austritt-Ringkanal gebildet ist, der durch Kanalwände begrenzt ist, deren Form einem vorbestimmten Austrittverhalten des Airbags angepasst sind.

11. Insassenschutzvorrichtung nach einem der Ansprüche 1 bis 10, **dadurch gekennzeichnet, dass** der ortsfeste Zentrumsbereich (21; 29) durch eine ortsfeste Zierkappe gebildet ist.

12. Insassenschutzvorrichtung nach einem der Ansprüche 1 bis 11, **dadurch gekennzeichnet, dass** der ortsfeste Zentrumsbereich, vorzugsweise eine Zierkappe, mit einem Dämmstoff, vorzugsweise einem Schaumstoff, unterlegt ist und/oder dass der zweite Wandbereich (24; 33) wenigstens teilweise als Lederüberzug ausgebildet ist.

## Claims

1. Passenger protection device on a steering wheel (2) in a motor vehicle with a steering wheel airbag module (20, 37),
in which the steering wheel airbag module (20, 37) is arranged behind a hub cover (18, 32) of a steering wheel hub and contains at least one folded up steering wheel airbag (28, 39) and at least one gas generator,
in which the hub cover (18, 32) has a fixed central area as a first wall area, around which a second wall area (24, 33) is arranged directly connecting to it with an edge connecting area (23, 31),
in which a ring slot (5) can be formed around the fixed central area (21, 29) in the second wall area (24, 33) when the airbag is activated,
in which the steering wheel airbag is made correspondingly ring shaped with a tube area (11) allocated to the ring slot (5) and goes out from it in the blown up state,
in which the ring slot (5) can be formed directly around the fixed central area (21, 29) by extending and/or opening up at least the edge connecting area (23, 31) of the second wall area (24, 33) when the airbag is activated,
**characterised by** the fact,
that the edge connecting area (23; 31) of the second wall area (33) is clamped to the fixed central area (21; 29) in the non activated state of the passenger protection device, and
that the edge connecting area (23; 31) can be extended and/or opened up by the airbag blowing up (28) which can be pulled out of the clamping device to form the ring slot (5) around the fixed central area (21; 29).

2. Passenger protection device according to claim 1, **characterised by** the fact
that the fixed central area (21) with a central edge area (22) lies on the edge connecting area (23) of the second wall area (24), and
that the edge connecting area (23) is clamped between the central edge area (22) and a clamping element (25).

3. Passenger protection device according to claim 2, **characterised by** the fact that the clamping element (25) clamps the edge connecting area (23) relating to the airbag module (20) with a clamping element edge area (26).

4. Passenger protection device according to claim 2 or claim 3, **characterised by** the fact
that the fixed central area (21) is made plate shaped and can be fixed with a central and somewhat vertically aligned pin extension (27) to the airbag module (20), preferably to the diffusor (19), and
that the clamping element (25) is made dish shaped with a dish edge as clamping element edge area (26) and has a central opening, through which the pin extension (27) of the fixed central area (21) penetrates, preferably interlocking.

5. Passenger protection device according to claim 1, **characterised by** the fact
that the fixed central area (29) has a peripheral groove on a peripheral area, in which the edge connecting area (31) of the second wall area (33) is made so it can be clipped in,
that the edge connecting area (31) can be extended and/or opened up by the airbag blowing up (39) which can be pulled out of the peripheral groove (30) to form the ring slot around the central element (29).

6. Passenger protection device according to claim 5, **characterised by** the fact
that the fixed central area (29) is supported with feet (34, 35) to align it on the airbag module housing, preferably a diffusor (36), and
that the fixed central area (29) can be fixed, preferably screwed, through a central and somewhat vertically aligned pin extension (38) to the airbag module housing, preferably the diffusor (36).

7. Passenger protection device according to one of claims 1 to 6, **characterised by** the fact that the first wall area surrounded by the ring slot (5) forming the fixed central area (21; 29) is connected firmly to the airbag module housing (9) and/or that at least a part of a housing wall of the airbag module forms the fixed central area (21; 29) as a visible surface.

8. Passenger protection device according to one of claims 1 to 7, **characterised by** the fact that the ring slot (5) is made somewhat ring shaped and surrounds a somewhat circular shaped first wall area as a fixed central area (21; 29).

9. Passenger protection device according to one of claims 1 to 8, **characterised by** the fact that the ring slot (5) which can be formed in the second wall area (24; 33) when the airbag is activated is limited by the edge area of a preferably cover shaped decorative cap as a fixed central area (8), so that this edge area can be bent open by an airbag pushing out of the ring slot (5) towards the outside to enlarge the ring slot to form a guide surface.

10. Passenger protection device according to one of claims 1 to 9, **characterised by** the fact that an exit ring channel is formed under the ring slot (5) which is limited by channel walls, the form of which is adapted to the predetermined exit behaviour of the airbag.

11. Passenger protection device according to one of claims 1 to 10, **characterised by** the fact that the fixed central area (21; 29) is formed by a fixed decorative cap.

12. Passenger protection device according to one of claims 1 to 11, **characterised by** the fact that the fixed central area, preferably a decorative cap, is lined with insulating material, preferably foam material, and/or that the second wall area (24; 33) is formed at least partly as a leather cover.

## Revendications

1. Dispositif de protection de passager monté sur un volant (2) d'un véhicule, avec un module coussins gonflables de sécurité pour volant (20, 37);
le module coussins gonflables de sécurité pour volant (20,37) étant disposé derrière un recouvrement de moyeu (18, 32) d'un moyeu de volant, et contenant au moins un coussin gonflable de sécurité pour volant (28, 39) replié, et au moins un générateur de gaz,
le recouvrement de moyeu (18, 32) présentant une zone centrale localement fixe, réalisée sous la forme de première zone de paroi, autour de laquelle une deuxième zone de paroi (24, 33) est disposée, s'y raccordant directement par une zone de raccordement de bordure (23, 31),
où, dans le cas d'activation du coussin gonflable de sécurité, un interstice annulaire (5) peut être réalisé dans la deuxième zone de paroi (24, 33), autour de la zone centrale (21, 29), localement fixe,
le coussin gonflable de sécurité pour volant étant réalisé de manière correspondante en forme d'anneau, avec une zone tubulaire (11), associée à l'interstice annulaire (5) et partant de celui-ci, lorsqu'on est à l'état gonflé,
où, dans le cas d'une activation du coussin gonflable de sécurité, l'interstice annulaire (5) est susceptible d'être réalisé directement autour de la zone centrale (21, 29) localement fixe, par un élargissement et/ou par une ouverture par déchirement, d'au moins la zone de raccordement de bordure (23, 31) de la deuxième zone de paroi (24, 33),
**caractérisé en ce que**
la zone de raccordement de bordure (23; 31) de la deuxième zone de paroi (33), à l'état non activité du dispositif de protection de passager, est enserrée sur la zone centrale (21; 29) localement fixe, et
**en ce que** la zone de raccordement de bordure (23; 31) est susceptible d'être extraite du blocage par serrage, du fait du gonflage du coussin gonflable de sécurité (28), et est susceptible d'être élargie et/ou ouverte par déchirement, pour former l'interstice annulaire (5) autour de la zone centrale (21; 29) localement fixe.

2. Dispositif de protection de passager selon la revendication 1, **caractérisé en ce que**
la zone centrale (21), localement fixe, repose, par une zone de bordure centrale (22), sur la zone de raccordement de bordure (23) de la deuxième zone de paroi (24), et
**en ce que** la zone de raccordement de bordure (23) est serrée entre la zone de bordure centrale (22) et un élément de serrage (25).

3. Dispositif de protection de passager selon la revendication 2, **caractérisé en ce que** l'élément de serrage (25) bloque par serrage la zone de raccordement de bordure (23), en observant depuis le module de coussin gonflable de sécurité (20), à l'aide d'une zone de bordure d'élément de serrage (26).

4. Dispositif de protection de passager selon la revendication 2 ou la revendication 3, **caractérisé en ce que**
la zone centrale (21), localement fixe est réalisée en forme de plaque et est susceptible d'être fixée, par un prolongement en tige (27), central et orienté verticalement, sur le module de coussin gonflable de sécurité (20), de préférence sur le diffuseur (19), et **en ce que** l'élément de serrage (25) est conformé en auge, avec un bord d'auge réalisé sous forme de zone de bordure d'élément de serrage (26), et présente une ouverture centrale à travers laquelle vient en prise, de préférence par une liaison à ajustement de forme, le prolongement en tige (27), de la zone centrale (21), localement fixe.

5. Dispositif de protection de passager selon la revendication 1, **caractérisé en ce que**
la zone centrale (29) localement fixe présente, sur une face périphérique, une gorge périphérique (30), dans laquelle la zone de raccordement de bordure (31) de la deuxième zone de paroi (33) est susceptible d'être enclipsée ou analogue,
**en ce que** la zone de raccordement de bordure (31) est susceptible d'être extraite hors de la gorge périphérique (30), du fait du gonflage du coussin gonflable de sécurité (39), et est susceptible d'être élargie et/ou ouverte par déchirement par le coussin gonflable de sécurité (39) se gonflant, pour former l'interstice annulaire autour de l'élément central (29).

6. Dispositif de protection de passager selon la revendication 5, **caractérisé en ce que**
la zone centrale (29) localement fixe soutient de préférence un diffuseur (36) pour assurer l'orientation, par des pieds (34, 35), sur le boîtier de module coussins gonflables de sécurité, et
**en ce que** la zone centrale (29), localement fixe, est susceptible d'être fixée, de préférence d'être vissée, par l'intermédiaire d'un prolongement en tige (38), central et orienté à peu près verticalement, sur le boîtier de module coussins gonflables de sécurité, de préférence sur le diffuseur (36).

7. Dispositif de protection de passager selon l'une des revendications de 1 à 6, **caractérisé en ce que** la première zone de paroi, entourée par l'interstice annulaire (5), formant la zone centrale (21; 29) localement fixe, est reliée rigidement au boîtier de module coussins gonflables de sécurité (9), et/ou **en ce qu'**au moins une partie d'une paroi de boîtier du module coussins gonflables de sécurité forme la zone centrale (21; 29) localement fixe, en tant que face visible.

8. Dispositif de protection de passager selon l'une des revendications de 1 à 7, **caractérisé en ce que** l'interstice annulaire (5) est conformé à peu près en forme d'anneau de cercle et entoure une première zone de paroi, à peu près en forme de face circulaire, à titre de zone centrale (21; 29) localement fixe.

9. Dispositif de protection de passager selon l'une des revendications 1 à 8, **caractérisé en ce que** l'interstice annulaire (5), pouvant être réalisé dans la deuxième zone de paroi (24; 33), dans le cas d'une activation du coussin gonflable de sécurité, est limité par la zone de bordure d'un capuchon décoratif de préférence en forme de couvercle, faisant office de zone centrale (8) localement fixe, de manière que cette zone de bordure puisse être ouverte par repli, par un coussin gonflable de sécurité sortant de l'interstice annulaire (5), vers l'extérieur, dans le but d'agrandir l'interstice annulaire et de réaliser une face de guidage.

10. Dispositif de protection de passager selon l'une des revendications 1 à 9, **caractérisé en ce que**, sous l'interstice annulaire (5), est formé un canal annulaire de sortie, limité par des parois de canaux dont la forme de chacun est adaptée à un comportement en sortie prédéterminé, de la part du coussin gonflable de sécurité.

11. Dispositif de protection de passager selon l'une des revendications 1 à 10, **caractérisé en ce que** la zone centrale (21; 29) localement fixe est formée par un capuchon décoratif localement fixe.

12. Dispositif de protection de passager selon l'une des revendications 1 à 11, **caractérisé en ce que** la zone centrale localement fixe, de préférence un capuchon décoratif, est muni(e) d'un garnissage sous-jacent, réalisé avec une substance isolante, de préférence un matériau alvéolaire, et/ou **en ce que** la deuxième zone de paroi (24; 33) est réalisée au moins partiellement sous forme de revêtement en cuir.
